# FASCICULE DE BREVET EUROPEEN

(11) **EP 2 851 300 B1**
(45) Date de publication et mention de la délivrance du brevet: **04.05.2016**
(21) Numéro de dépôt: 14184962.0
(22) Date de dépôt: 16.09.2014
(51) Int. Cl.: B64D 33/08, F02C 7/18

(54) **Dispositif de carénage pour ensemble propulsif d'aéronef comprenant un compartiment intérieur équipé d'un ventilateur**
Verkleidungsvorrichtung für das gesamte Antriebssystem eines Luftfahrzeugs, die ein Innenfach mit einem Ventilator enthält
Fairing device for aircraft propulsion assembly including an inner compartment provided with a fan

(30) Priorité: 19.09.2013 FR 1359028
(43) Date de publication de la demande: 25.03.2015
(73) Titulaire: AIRBUS OPERATIONS (SAS), 31060 Toulouse (FR)
(72) Inventeur: Verseux, Olivier, 31170 TOURNEFEUILLE (FR)
(74) Mandataire: Brevalex

(56) Documents cités:
- EP-A2- 2 607 658
- WO-A2-2010/136710
- DE-A1- 3 512 714
- FR-A1- 2 955 897
- US-A- 2 578 481
- US-B1- 6 202 403

## Description

### DOMAINE TECHNIQUE

La présente invention concerne un ensemble propulsif pour aéronef comprenant au moins un dispositif de carénage, et porte plus particulièrement sur le refroidissement d'un compartiment défini à l'intérieur d'un tel dispositif de carénage.

L'invention est applicable indifféremment aux ensembles propulsifs comprenant un turboréacteur et à ceux comprenant un turbopropulseur ou encore à ceux comprenant un turboréacteur à hélices non carénées, du type également dénommé

### « Open Rotor ».

Plus précisément, le dispositif de carénage selon l'invention peut être du type délimitant extérieurement le canal de flux secondaire d'un turboréacteur à double flux, ou du type séparant le canal de flux secondaire et le coeur d'un tel turboréacteur à double flux, ou encore du type délimitant extérieurement un turbopropulseur ou un turboréacteur à hélices non carénées.

L'invention concerne également un aéronef équipé d'un tel ensemble propulsif, ainsi qu'un procédé de ventilation d'un compartiment intérieur dans un dispositif de carénage d'un tel ensemble propulsif.

### ÉTAT DE LA TECHNIQUE ANTÉRIEURE

Dans un ensemble propulsif dont la turbomachine est un turboréacteur, le dispositif de carénage extérieur qui entoure le turboréacteur comporte en général une paroi annulaire ou enveloppe externe et une paroi annulaire ou enveloppe interne. La paroi annulaire externe forme un carénage extérieur le long duquel s'écoule le vent relatif en vol, tandis que la paroi annulaire interne est destinée à canaliser un flux d'air alimentant la turbomachine. Dans le cas d'un turboréacteur à double flux, le flux d'air canalisé par la paroi annulaire interne est le flux secondaire propulsé par la soufflante et s'écoulant vers l'aval autour du coeur du turboréacteur.

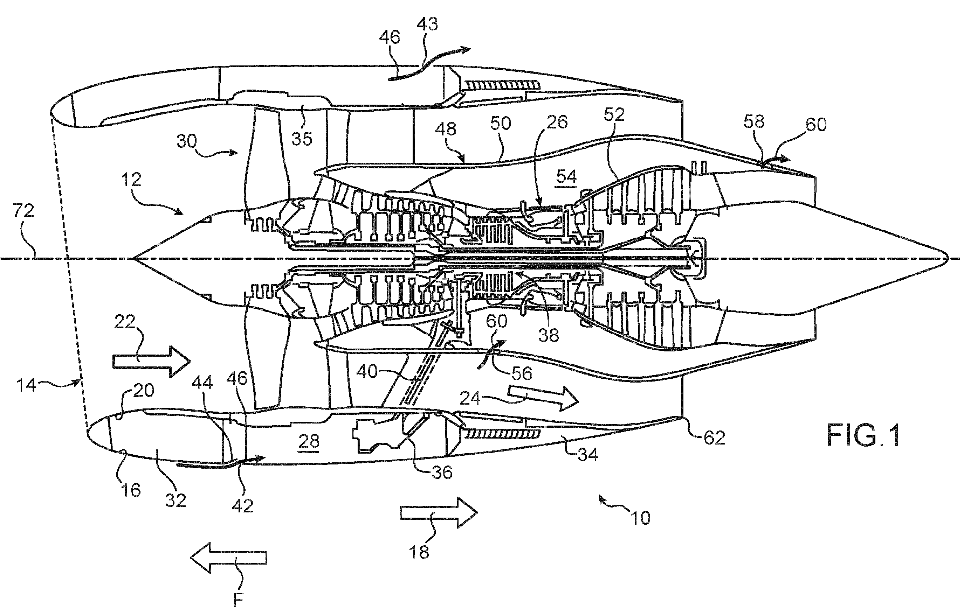

La figure 1 est une vue partielle en section axiale d'un ensemble propulsif 10 d'aéronef d'un type connu, comprenant un turboréacteur 12 à double flux et un dispositif de carénage extérieur 14 entourant ce turboréacteur.

Comme l'illustre cette figure, la paroi annulaire externe 16 carène l'ensemble propulsif 10 vis-à-vis du vent relatif 18 tandis que la paroi annulaire interne 20 canalise, en amont, le flux d'air 22 pénétrant dans l'ensemble propulsif, et en aval, le flux secondaire 24 issu du flux 22 précité et s'écoulant autour du coeur 26 du turboréacteur 12.

Dans l'ensemble de la présente description, les directions « amont » et « aval » sont définies par rapport au sens global de l'écoulement des gaz dans la turbomachine, et les termes « avant » et « arrière » sont à considérer par rapport à une direction F d'avancement de l'aéronef sous l'effet de la poussée exercée par le turboréacteur 12, cette direction étant parallèle à un axe longitudinal 72 du turboréacteur.

Les parois annulaires externe 16 et interne 20 délimitent entre elles un compartiment intérieur 28 du dispositif de carénage extérieur 14, également dénommé « compartiment de soufflante » du fait de sa localisation au droit de la soufflante 30, entre une manche d'entrée d'air 32 et un inverseur de poussée 34.

En général, la paroi externe 16, une portion amont de la paroi interne 20 correspondant à la manche d'entrée d'air 32, et une portion aval de la paroi interne 20 correspondant à l'inverseur de poussée 34, font partie d'une nacelle de l'ensemble propulsif 10. En revanche, une portion intermédiaire de la paroi interne 20, qui délimite le compartiment intérieur 28, fait partie d'un carter intermédiaire 35 solidaire du coeur 26 du turboréacteur.

Le compartiment intérieur 28 contient habituellement un boîtier de commande d'accessoires 36, également dénommé *AGB (« Accessory Gear Box v),* destiné à relier mécaniquement un rotor 38 de la turbomachine à un ou plusieurs accessoires, tel qu'un démarreur. Dans l'exemple illustré, le rotor 38 concerné est un rotor de compresseur haute pression et est relié à l'AGB 36 par l'intermédiaire d'un arbre de renvoi 40 s'étendant depuis le coeur 26 du turboréacteur jusque dans le compartiment intérieur 28.

Par ailleurs, le compartiment intérieur 28 est en général mis à profit pour loger un ou plusieurs systèmes, tels qu'une unité de commande de la turbomachine, également dénommée *ECU (« Engine Control Unit* »*)*, aucun de ces systèmes n'étant visible dans le plan de section de la figure 1.

Certains de ces systèmes nécessitent en général un refroidissement pour fonctionner de manière satisfaisante.

De plus, les normes de sécurité imposent que la concentration de l'air en vapeurs inflammables au sein du compartiment intérieur 28 ne dépasse pas un niveau maximal prédéfini, de sorte que le compartiment intérieur doit être ventilé. Par « ventilation », il faut comprendre le renouvellement régulier de l'air au sein du compartiment intérieur 28.

Pour permettre la ventilation du compartiment intérieur 28 et le refroidissement des systèmes éventuellement logés dans celui-ci, le dispositif de carénage extérieur 14 comporte habituellement un orifice d'admission d'air 42 ainsi qu'un orifice d'échappement d'air 43 formés dans la paroi externe 16. Les deux orifices 42 et 43 sont en général diamétralement opposés comme sur la figure 1. De plus, l'orifice d'admission d'air 42 est en général agencé à proximité de l'extrémité amont du compartiment intérieur 28 tandis que l'orifice d'échappement est typiquement agencé à proximité de l'extrémité aval du compartiment intérieur 28.

Au niveau de l'orifice d'admission d'air 42, la paroi externe 16 est en général profilée de manière à former une prise d'air dynamique. A cet effet, le bord amont 44 de l'orifice d'admission d'air 42 est par exemple incurvé vers l'intérieur du compartiment intérieur 28 comme sur la figure 1 pour former une prise d'air du type couramment dénommé « NACA », de nature à favoriser la pénétration de la couche d'air limite, circulant le long de la paroi externe 16, dans l'orifice d'admission d'air 42. En variante ou en complément, le bord aval de l'orifice d'admission d'air 42 peut être bombé vers l'extérieur pour former une écope, également de nature à favoriser le prélèvement de l'air circulant le long de la paroi externe 16. Une telle écope peut en variante être formée d'une pièce rapportée sur la paroi externe 16, en regard de l'orifice d'admission d'air 42.

Le flux d'air admis dans le compartiment intérieur 28 forme alors un flux de ventilation 46 circulant dans le compartiment intérieur pour finir par en sortir au travers de l'orifice d'échappement d'air 43.

Toutefois, l'efficacité du refroidissement du compartiment intérieur 28 dépend alors de la vitesse du vent relatif 18 baignant le dispositif de carénage extérieur 14, et donc de la vitesse d'avancement de l'aéronef.

Ainsi, lorsque l'aéronef évolue à faible vitesse au sol ou est à l'arrêt, la prise d'air dynamique précitée devient inopérante et le refroidissement du compartiment intérieur 28 du dispositif de carénage extérieur 14 n'est plus assuré que par convection naturelle au travers des orifices d'admission d'air 42 et d'échappement d'air 43, ce qui peut se révéler insuffisant.

Une solution pour assurer autant que possible une ventilation et un refroidissement satisfaisants dans ces conditions de faible vitesse consiste à surdimensionner les orifices d'admission d'air 42 et d'échappement d'air 43, et/ou à accentuer le profil aérodynamique de la paroi externe 20 au niveau du bord de l'orifice d'admission d'air 42, de manière à accroître le débit du flux de ventilation 46.

Cependant, cette solution pénalise la traînée aérodynamique de l'ensemble propulsif, notamment du fait d'un accroissement de la traînée de captation en vol, en particulier en phase de croisière.

De plus, en cas d'incendie dans le compartiment intérieur 28, la circulation d'un flux d'air de ventilation 46 relativement important n'est pas souhaitable car cela accroît le taux d'oxygène de l'air au sein du compartiment intérieur, ce qui risque de rendre plus difficile l'extinction de l'incendie. Les dispositifs de carénage extérieurs sont en général équipés d'un système d'extinction d'incendie apte à délivrer un agent d'extinction au sein du compartiment intérieur 28. Le débit relativement élevé du flux d'air de ventilation rend alors nécessaire un surdimensionnement du système d'extinction d'incendie afin que ce dernier soit capable d'assurer une concentration satisfaisante en agent d'extinction au sein du compartiment intérieur 28 en cas d'incendie.

De manière générale, en cas d'incendie, le flux d'air de ventilation 46 du compartiment intérieur 28 ne peut pas être interrompu ou tout au moins diminué, ce qui tend à réduire l'efficacité de l'agent d'extinction.

Par ailleurs, dans les turboréacteurs à double flux (voir, par exemple, le document FR2955897), comme le montre la figure 1, le flux secondaire 24 est séparé du coeur 26 du turboréacteur par un dispositif de carénage intérieur 48 comprenant une paroi externe 50 et une paroi interne 52 délimitant entre elles un compartiment intérieur 54, couramment dénommé « compartiment de coeur». La paroi externe 50 est parfois dénommée « *IFS* » *(« Inner Fixed Structure »).*

Pour limiter la concentration en vapeurs inflammables, ce compartiment intérieur 54 requiert également d'être ventilé, ce qui est en général obtenu au moyen d'un orifice d'admission d'air 56, habituellement en amont, et d'un orifice d'échappement d'air 58, habituellement en aval. Ces orifices 56 et 58 permettent la circulation d'un flux d'air de ventilation 60 au sein du compartiment intérieur 54. Les orifices 56 et 58 sont de préférence diamétralement opposés.

En particulier, l'orifice d'échappement d'air 58 est de préférence agencé en aval d'une extrémité aval 62 du dispositif de carénage extérieur 14 afin que la pression de l'air circulant le long de la paroi externe 50 du dispositif de carénage intérieur 48 soit la plus faible possible en regard de l'orifice d'échappement d'air 58. En variante, l'orifice d'échappement d'air 58 peut communiquer avec un canal traversant un bras raccordé au dispositif de carénage extérieur 14, et débouchant à l'extérieur de l'ensemble propulsif au travers de la paroi externe 16 du dispositif de carénage extérieur 14.

L'orifice d'admission d'air 56 peut prendre la forme d'une prise dynamique moyennant une conformation appropriée de la paroi extérieure 50, comme expliqué ci-dessus en ce qui concerne le dispositif de carénage extérieur 14.

Par ailleurs, la circulation du flux de ventilation 60 dans le compartiment intérieur 54 permet également, le cas échéant, de refroidir d'éventuels systèmes logés au sein de ce compartiment.

Toutefois, le flux de ventilation 60 traversant le compartiment intérieur 54 du dispositif de carénage intérieur 48 peut se révéler insuffisant, en particulier dans les turboréacteurs présentant de forts taux de dilution.

La solution consistant à surdimensionner les orifices d'admission d'air 56 et d'échappement d'air 58 pénalise cependant les performances du turboréacteur et présente aussi les inconvénients décrits ci-dessus en ce qui concerne le risque d'incendie.

Des problématiques analogues se posent en ce qui concerne le dispositif de carénage qui entoure le coeur d'un turbopropulseur ou d'un turboréacteur à hélices non carénées.

### EXPOSÉ DE L'INVENTION

L'invention a notamment pour but d'apporter une solution simple, économique et efficace à ces problèmes, permettant d'éviter au moins en partie les inconvénients précités.

L'invention a en particulier pour but d'apporter à ces problèmes une solution qui soit peu consommatrice d'énergie et qui présente toutes les garanties requises en matière de sécurité.

L'invention propose à cet effet un ensemble propulsif pour aéronef, comprenant une turbomachine, dans lequel la turbomachine comprend un rotor et est équipée d'une boîte de commande d'accessoires comportant au moins un engrenage mécaniquement couplé au rotor. L'ensemble propulsif comprend en outre un dispositif de carénage, comprenant une paroi annulaire externe et une paroi annulaire interne qui délimitent entre elles un compartiment intérieur pourvu d'un orifice d'admission d'air et d'un orifice d'échappement d'air.

Selon l'invention, l'ensemble propulsif comprend au moins un ventilateur logé dans ledit compartiment intérieur et comportant une hélice et des moyens d'accouplement et de désaccouplement de ladite hélice et dudit engrenage.

Le ventilateur permet de refroidir le compartiment intérieur même lorsque l'aéronef évolue à basse vitesse au sol ou lorsqu'il est à l'arrêt.

L'invention permet ainsi de limiter les dimensions requises pour l'orifice d'admission d'air formé dans la paroi externe du dispositif de carénage.

Cela permet notamment de faciliter l'extinction d'un éventuel incendie au sein du compartiment intérieur, et donc de limiter le dimensionnement requis pour un système d'extinction d'incendie pouvant équiper le dispositif de carénage.

L'invention permet en outre de rendre superflue la présence d'une prise d'air dynamique pour assurer l'admission d'air. Cela contribue également à la réduction de la traînée de captation du dispositif de carénage.

En particulier, l'absence d'écope en saillie au niveau de l'orifice d'admission d'air permet en outre de réduire le risque d'accrétion de givre au niveau de cet orifice.

L'invention permet en outre d'offrir davantage de possibilités en ce qui concerne le positionnement de l'orifice d'admission d'air.

Les moyens d'accouplement et de désaccouplement de l'hélice et de l'engrenage permettent tour à tour d'accoupler et de désaccoupler ces deux éléments, et donc de démarrer et d'arrêter le ventilateur à volonté.

Cela permet notamment d'éviter de prélever de l'énergie mécanique sur la boîte de commande d'accessoires pour l'entraînement de l'hélice lorsque le fonctionnement du ventilateur n'est pas nécessaire au refroidissement et à la ventilation du compartiment intérieur équipé de ce ventilateur.

Lesdits moyens d'accouplement et de désaccouplement comprennent avantageusement un premier arbre solidaire en rotation de ladite hélice, un second arbre solidaire en rotation dudit engrenage de ladite boîte de commande d'accessoires, ainsi qu'un embrayage électromagnétique reliant mutuellement ledit premier arbre audit second arbre.

Dans un premier mode de réalisation préféré de l'invention, ladite turbomachine est un turboréacteur à double flux, ladite paroi annulaire externe forme un carénage externe de ladite turbomachine, et ladite paroi annulaire interne délimite un canal annulaire d'écoulement d'un flux d'air secondaire de ladite turbomachine.

Autrement dit, la paroi annulaire externe est baignée par le vent relatif s'écoulant autour de la turbomachine, tandis que la paroi annulaire interne est baignée par le flux d'air secondaire.

Dans ce cas, ledit compartiment intérieur est de préférence situé axialement entre une manche d'entrée d'air et un inverseur de poussée faisant partie dudit dispositif de carénage.

Dans un deuxième mode de réalisation préféré de l'invention, ladite turbomachine est un turboréacteur à double flux, ladite paroi annulaire externe délimite un canal annulaire d'écoulement d'un flux d'air secondaire de ladite turbomachine, et ladite paroi annulaire interne délimite un coeur de ladite turbomachine.

Autrement dit, la paroi annulaire externe est baignée par le flux d'air secondaire, tandis que la paroi annulaire interne entoure le coeur de la turbomachine. Certaines portions de la paroi annulaire interne peuvent délimiter un canal annulaire d'écoulement d'un flux d'air primaire de la turbomachine.

Dans un troisième mode de réalisation préféré de l'invention, ladite turbomachine est un turboréacteur à simple flux ou un turboréacteur à hélices non carénées ou un turbopropulseur, ladite paroi annulaire externe forme un carénage externe de ladite turbomachine, et ladite paroi annulaire interne délimite un coeur de ladite turbomachine.

Autrement dit, la paroi annulaire externe est baignée par le vent relatif s'écoulant autour de la turbomachine, tandis que la paroi annulaire interne entoure le coeur de la turbomachine. Certaines portions de la paroi annulaire interne peuvent délimiter un canal annulaire d'écoulement d'un flux d'air au sein de la turbomachine.

D'une manière générale, l'ensemble propulsif comprend avantageusement une unité de commande pour commander lesdits moyens d'accouplement et de désaccouplement.

L'unité de commande est de préférence reliée électriquement aux moyens d'accouplement et de désaccouplement de manière à permettre une commande électrique de ces derniers.

L'ensemble propulsif comprend avantageusement des moyens de mesure configurés pour mesurer la température de l'air au sein dudit compartiment intérieur et fournir le résultat de cette mesure à ladite unité de commande. De plus, ladite unité de commande est de préférence configurée de sorte que ladite hélice du ventilateur et ledit engrenage de la boîte de commande d'accessoires soient désaccouplés lorsque la température mesurée par lesdits moyens de mesure est inférieure à un seuil de température prédéterminé, et de sorte que ladite hélice du ventilateur et ledit engrenage de la boîte de commande d'accessoires soient accouplés lorsque la température mesurée par lesdits moyens de mesure est supérieure audit seuil de température prédéterminé.

Ainsi, la ventilation peut être activée dès que la température mesurée dans le compartiment atteint le seuil de température précité.

Par ailleurs, l'ensemble propulsif comprend avantageusement des moyens d'information pour fournir une information relative à la vitesse de rotation du rotor à ladite unité de commande, et ladite unité de commande est de préférence configurée de sorte que ladite hélice du ventilateur et ledit engrenage de la boîte de commande d'accessoires soient désaccouplés lorsque la vitesse de rotation du rotor est supérieure à un seuil de vitesse prédéterminé, et de sorte que ladite hélice du ventilateur et ledit engrenage de la boîte de commande d'accessoires soient accouplés lorsque la vitesse de rotation du rotor est inférieure audit seuil de vitesse prédéterminé.

Ainsi, la ventilation peut être activée dès que la vitesse de rotation du rotor descend sous le seuil de vitesse précité. Une telle situation peut en effet correspondre à une phase de déplacement de l'aéronef à faible vitesse, justifiant l'activation de la ventilation.

Dans le cas où l'ensemble propulsif comprend à la fois les moyens de mesure et les moyens d'information précités, l'unité de commande est de préférence configurée de sorte que ladite hélice du ventilateur et ledit engrenage de la boîte de commande d'accessoires soient désaccouplés lorsque la température mesurée par lesdits moyens de mesure est inférieure au seuil de température prédéterminé et la vitesse de rotation du rotor est supérieure au seuil de vitesse prédéterminé, et de sorte que ladite hélice du ventilateur et ledit engrenage soient accouplés lorsque la température mesurée par lesdits moyens de mesure est supérieure audit seuil de température prédéterminé ou la vitesse de rotation du rotor est inférieure audit seuil de vitesse prédéterminé.

L'invention concerne encore un aéronef, comprenant au moins un ensemble propulsif du type décrit ci-dessus.

L'invention concerne enfin un procédé de ventilation d'un compartiment intérieur dans un dispositif de carénage d'un ensemble propulsif du type décrit ci-dessus, comprenant l'accouplement de ladite hélice et dudit engrenage de sorte que l'engrenage entraîne l'hélice de manière à générer un flux d'air de ventilation, puis le désaccouplement de ladite hélice et dudit engrenage de sorte que l'engrenage n'entraîne plus l'hélice.

Dans le cas où l'ensemble propulsif comprend ladite unité de commande et lesdits moyens de mesure, ledit procédé comprend de préférence l'accouplement de ladite hélice du ventilateur et dudit engrenage de la boîte de commande d'accessoires lorsque la température mesurée par lesdits moyens de mesure est supérieure audit seuil de température prédéterminé, et le désaccouplement de ladite hélice et dudit engrenage lorsque la température mesurée par lesdits moyens de mesure est inférieure audit seuil prédéterminé.

Dans le cas où l'ensemble propulsif comprend ladite unité de commande et lesdits moyens d'information, ledit procédé comprend de préférence l'accouplement de ladite hélice du ventilateur et dudit engrenage de la boîte de commande d'accessoires lorsque la vitesse de rotation du rotor est inférieure audit seuil de vitesse prédéfini, et le désaccouplement de ladite hélice et dudit engrenage lorsque la vitesse de rotation du rotor est supérieure audit seuil de vitesse prédéfini.

Enfin, dans le cas où l'ensemble propulsif comprend à la fois les moyens de mesure et les moyens d'information précités, ledit procédé comprend de préférence le désaccouplement de ladite hélice et dudit engrenage lorsque la température mesurée par lesdits moyens de mesure est inférieure au seuil de température prédéterminé et la vitesse de rotation du rotor est supérieure au seuil de vitesse prédéterminé, et l'accouplement de ladite hélice et dudit engrenage lorsque la température mesurée par lesdits moyens de mesure est supérieure audit seuil de température prédéterminé ou la vitesse de rotation du rotor est inférieure audit seuil de vitesse prédéterminé.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en section axiale d'un ensemble propulsif d'un type connu ;
- la figure 2 est une vue schématique partielle en section axiale d'un ensemble propulsif selon un premier mode de réalisation préféré de l'invention ;
- la figure 2a est une vue à plus grande échelle d'un ventilateur appartenant à un dispositif de carénage de l'ensemble propulsif de la figure 2 ;
- la figure 3 est une vue schématique partielle en section axiale d'un ensemble propulsif selon un deuxième mode de réalisation préféré de l'invention ;
- la figure 4 est une vue schématique partielle en section axiale d'un ensemble propulsif selon un troisième mode de réalisation préféré de l'invention.

Dans ces figures, des références identiques peuvent désigner des éléments identiques ou analogues.

### EXPOSÉ DÉTAILLÉ DE MODES DE RÉALISATION PRÉFÉRÉS

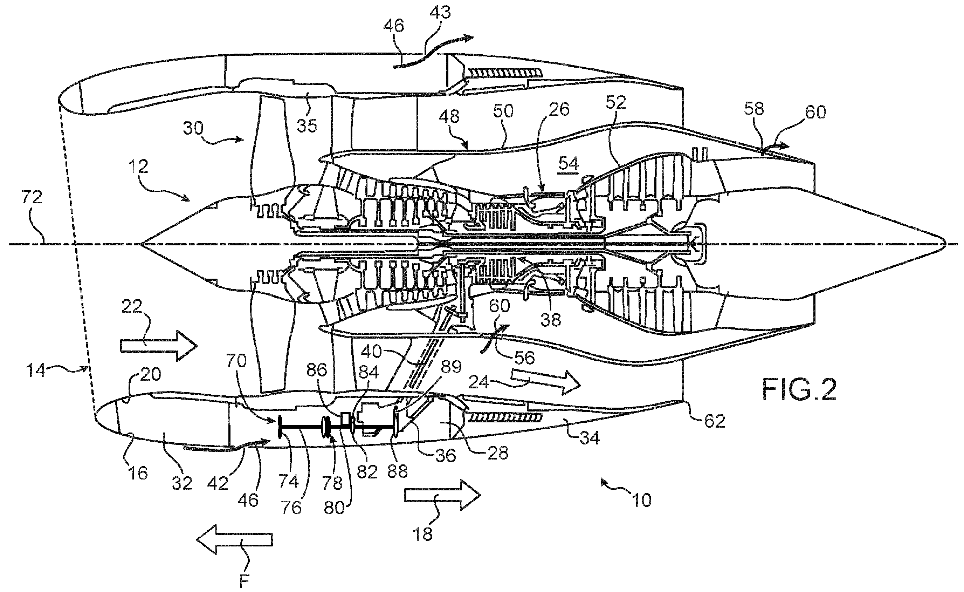

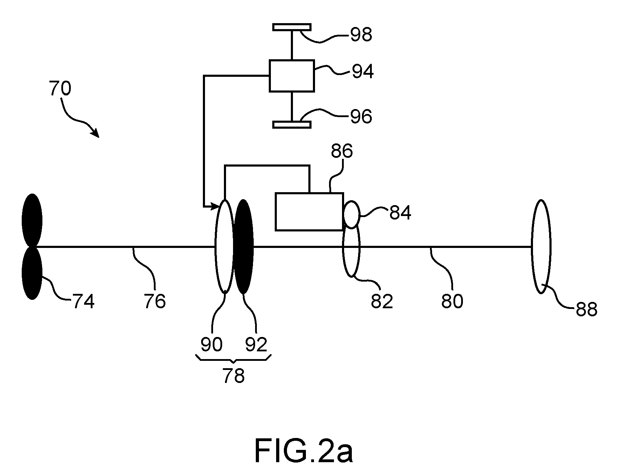

La figure 2 illustre un ensemble propulsif 10 selon un premier mode de réalisation de l'invention, semblable à celui de la figure 1, mais dans lequel un ventilateur 70 est logé dans le compartiment intérieur 28 du dispositif de carénage extérieur 14, en arrière de l'orifice d'admission d'air 42.

Le ventilateur 70 comporte, de l'avant vers l'arrière, une hélice 74, un premier arbre 76 solidaire de l'hélice 74, un embrayage électromagnétique 78, un second arbre 80 portant un premier engrenage 82 engrené avec un arbre de rotor 84 d'un moteur électrique 86 et un second engrenage 88 engrené avec un engrenage 89 faisant partie de la boîte de commande d'accessoires 36 et entraîné en rotation par l'arbre de renvoi 40.

Le premier arbre 76, l'embrayage électromagnétique 78, le second arbre 80, et le second engrenage 88 forment des moyens d'accouplement et de désaccouplement de l'hélice 74 et de l'engrenage 89 de la boîte de commande d'accessoires 36, dans la terminologie de l'invention.

L'embrayage électromagnétique 78, illustré très schématiquement sur la figure 2a, comporte une première partie rotative 90 solidaire en rotation du premier arbre 76, ainsi qu'une seconde partie rotative 92 solidaire en rotation du second arbre 80. D'une manière connue en soi, l'embrayage électromagnétique 78 intègre des moyens commandés électriquement permettant alternativement d'accoupler et de désaccoupler les deux parties rotatives 90 et 92. Plus précisément, les deux parties rotatives 90 et 92 sont accouplées en étant sollicitées l'une vers l'autre, sous l'effet d'une force de rappel, de préférence d'origine mécanique, jusqu'à entrer en contact et se solidariser en rotation l'une avec l'autre. Inversement, les deux parties rotatives 90 et 92 sont désaccouplées en étant sollicitées l'une vers la direction opposée à l'autre, sous l'effet d'une force magnétique de direction opposée, jusqu'à ce que les deux parties rotatives ne soient plus solidaires en rotation l'une avec l'autre.

Le moteur électrique 86 est utilisé en tant que source de courant électrique pour commander l'embrayage électromagnétique 78. A cet effet, l'arbre de rotor 84 du moteur électrique 86 est entraîné en rotation par le premier engrenage 82 porté par le second arbre 80 de manière à induire un courant électrique alimentant l'embrayage électromagnétique 78.

En variante, le moteur électrique peut être intégré au second arbre 80, c'est-à-dire que le rotor du moteur électrique peut être directement constitué par le second arbre 80, auquel cas le stator du moteur électrique entoure ce second arbre 80.

En variante encore, l'embrayage électromagnétique 78 peut être raccordé à un réseau électrique général du turboréacteur, alimenté par un alternateur principal du turboréacteur, parfois dénommé « *IDG » (« Integrated Drive Generator »),* et le cas échéant par un groupe auxiliaire de puissance de ce turboréacteur, couramment dénommé « *APU » (« Auxiliary Power Unit »).*

L'ensemble propulsif 10 comporte une unité de commande 94 capable de commuter l'état de l'embrayage électromagnétique 78 et donc de commander la mise en rotation et l'arrêt de l'hélice 74 du ventilateur 70.

Cette unité de commande 94 peut être une unité multifonctionnelle couramment appelée « Unité de contrôle du moteur ou *« ECU » (« Engine Control Unit »),* ou en variante, une unité électronique dédiée au contrôle du ventilateur 70.

Dans les deux cas, l'unité de commande 94 est de préférence couplée à des moyens de mesure, comprenant un capteur 96, pour mesurer la température de l'air au sein du compartiment intérieur 28.

De plus, l'unité de commande 94 est de préférence couplée à des moyens d'information 98 permettant de fournir une information relative à la vitesse de rotation du rotor 38 à l'unité de commande 94.

Cette unité de commande 94 est configurée pour que les deux parties rotatives 90 et 92 de l'embrayage électromagnétique 78 soient :
- désaccouplées lorsque la température mesurée par ledit capteur 96 est inférieure à un seuil de température prédéterminé et que la vitesse de rotation du rotor 38 fournie par les moyens d'information 98 est supérieure à un seuil de vitesse prédéterminé,
- accouplées lorsque la température mesurée dépasse le seuil de température prédéterminé ou que la vitesse de rotation du rotor 38 est inférieure au seuil de vitesse prédéterminé.

Ainsi, lorsque la température mesurée dépasse le seuil de température précité, l'hélice 74 du ventilateur 50 est entraînée en rotation et permet d'accroître la ventilation du compartiment intérieur 28 par convection forcée, et donc également d'améliorer le refroidissement des systèmes éventuellement logés au sein du compartiment intérieur 28. Il en est de même lorsque la vitesse de rotation du rotor 38 est inférieure au seuil de vitesse prédéterminé, ce qui peut traduire une phase de vol à faible vitesse ou de roulage au sol nécessitant l'action du ventilateur.

En revanche, lorsque la température mesurée est inférieure au seuil de température précité et que la vitesse de rotation du rotor 38 est supérieure au seuil de vitesse prédéterminé, l'hélice 74 du ventilateur 70 n'est pas entraînée en rotation, afin de limiter la traînée de captation relative à l'orifice d'admission d'air 42 ainsi que la consommation d'énergie du ventilateur 50.

Il est à noter que les moyens d'information 98 peuvent comprendre un capteur de vitesse dédié relié à l'unité de commande 94 et permettant de mesurer la vitesse de rotation du rotor. En variante, les moyens d'information 98 peuvent être constitués d'une liaison apte à être connectée à une unité électronique équipant la cellule d'un aéronef pour recevoir une information relative au régime moteur ou à la phase de vol correspondant à la position des dispositifs de commande de vol équipant le poste de pilotage de l'aéronef. Dans ce cas, le seuil de vitesse prédéterminé peut correspondre à un régime moteur minimal imposé pour une certaine phase de vol, par exemple la phase de croisière.

Enfin, l'unité de commande 94 est configurée pour qu'en condition de défaut, dite *« fail safe »*, les deux parties rotatives 90 et 92 de l'embrayage électromagnétique 78 soient accouplées, de sorte que le ventilateur 70 assure alors la ventilation du compartiment intérieur 28. A cet effet, l'embrayage électromagnétique 78 est conçu de sorte qu'en l'absence de courant électrique pour l'alimenter, ses deux parties rotatives 90 et 92 soient accouplées.

En fonctionnement, la ventilation du compartiment intérieur 28 peut ainsi être réalisée au moyen d'un procédé comprenant :
- l'accouplement de l'hélice 74 du ventilateur et de l'engrenage de la boîte de commande d'accessoires 36, 36' lorsque la température mesurée par les moyens de mesure 96 est supérieure au seuil de température prédéterminé ou que la vitesse de rotation du rotor 38 fournie par les moyens d'information 98 est inférieure au seuil de vitesse prédéterminé, et
- le désaccouplement de l'hélice 74 et de l'engrenage 89, 89' lorsque la température mesurée par les moyens de mesure est inférieure au seuil prédéterminé et que la vitesse de rotation du rotor 38 est supérieure au seuil de vitesse prédéterminé.

L'invention selon le premier mode de réalisation propose ainsi un moyen simple et efficace pour assurer la ventilation du compartiment intérieur 28 du dispositif de carénage extérieur 14, qui conserve son efficacité lorsque l'aéronef évolue à basse vitesse au sol ou lorsqu'il est à l'arrêt.

L'invention permet ainsi de limiter les dimensions requises pour l'orifice d'admission d'air 42 formé dans la paroi externe 16 du dispositif de carénage extérieur 14. Cela permet notamment de faciliter l'extinction d'un éventuel incendie au sein du compartiment intérieur 28, et donc de limiter le dimensionnement du système d'extinction d'incendie requis pour le dispositif de carénage extérieur 14.

L'invention permet en outre de rendre superflu le caractère dynamique de la prise d'air formée par l'orifice d'admission d'air 42. Autrement dit, la paroi externe 16 peut être dépourvue de portion profilée et d'écope de sorte que l'orifice d'admission d'air forme sensiblement une prise d'air statique. Il en résulte une réduction de la traînée aérodynamique du dispositif de carénage extérieur 14. L'absence d'écope permet en outre de réduire le risque d'accrétion de givre au niveau de l'orifice d'admission d'air 42.

L'invention permet de manière générale une meilleure maîtrise du débit du flux d'air de ventilation 46, ce qui permet en particulier de limiter la traînée de captation en vol.

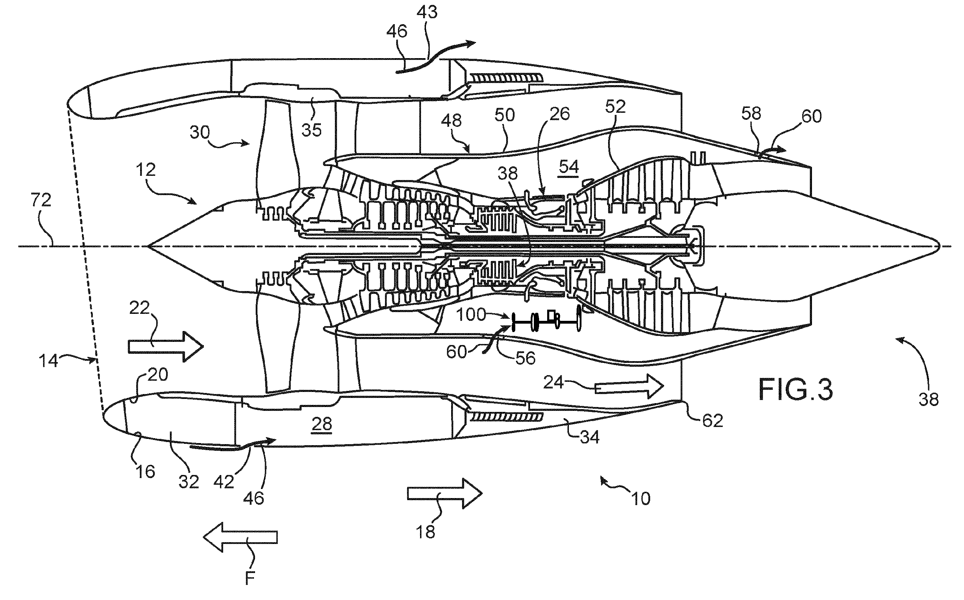

La figure 3 illustre un ensemble propulsif 10 selon un deuxième mode de réalisation de l'invention, semblable à celui de la figure 1, mais dans lequel un ventilateur 100 est logé dans le compartiment intérieur 54 du dispositif de carénage intérieur 48, en arrière de l'orifice d'admission d'air 56 de celui-ci.

Dans l'exemple illustré, le ventilateur 100 est semblable au ventilateur 70 de la figure 2, et est aussi accouplé à un engrenage d'une boîte de commande d'accessoires, cette dernière étant dans ce cas logée dans le compartiment intérieur 54 du dispositif de carénage intérieur 48. Il est à noter que pour un gain d'encombrement, le ventilateur 100 est décalé circonférentiellement, autour de l'axe longitudinal 72 du turboréacteur, par rapport à la boîte de commande d'accessoires, de sorte que cette dernière n'est pas visible dans le plan de section de la figure 3.

Le fonctionnement du ventilateur 100 est semblable à celui du ventilateur 70 décrit ci-dessus.

L'invention selon le deuxième mode de réalisation propose ainsi un moyen simple et efficace pour assurer la ventilation du compartiment intérieur 54 du dispositif de carénage intérieur 48, qui est particulièrement avantageux dans un turboréacteur à fort taux de dilution.

L'invention selon ce deuxième mode de réalisation présente également les avantages du premier mode de réalisation relatifs au risque d'incendie, mais ici au sein du compartiment intérieur 54 du dispositif de carénage intérieur 48.

Il est à noter que les deux modes de réalisation décrits ci-dessus peuvent être combinés pour offrir un turboréacteur dans lequel les compartiments internes 28 et 54 respectifs des dispositifs de carénage extérieur 14 et intérieur 48 incluent chacun un ventilateur. Dans ce cas, les deux ventilateurs peuvent être chacun accouplés au rotor 38 de compresseur par des moyens mécaniques prévus à cet effet.

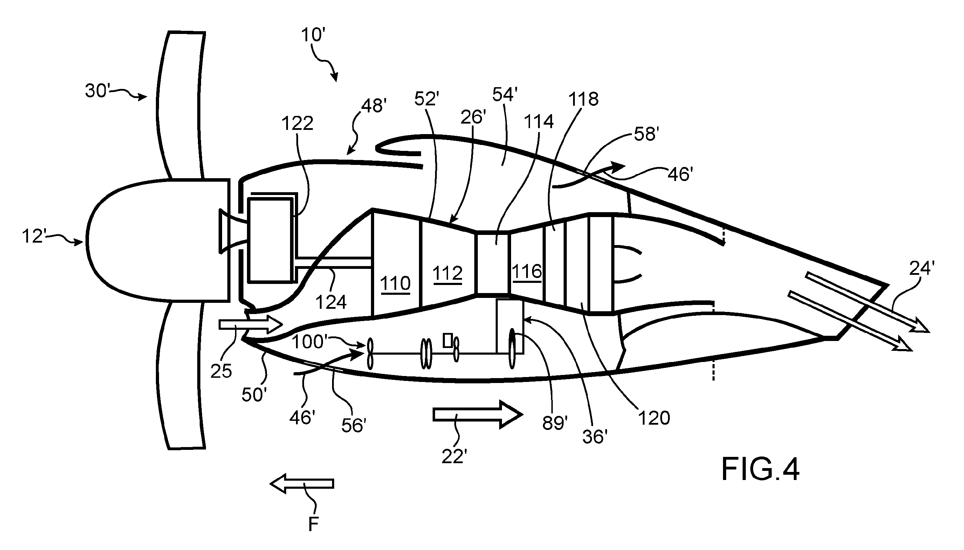

La figure 4 illustre un ensemble propulsif 10' selon un troisième mode de réalisation de l'invention, dont la turbomachine est un turbopropulseur 12' et comporte de manière générale une hélice 30' et un coeur 26' incluant par exemple un compresseur de pression intermédiaire 110, un compresseur haute pression 112, une chambre de combustion 114, une turbine haute pression 116, une turbine de pression intermédiaire 118 et une turbine basse pression 120. L'hélice 30' est couplée à un dispositif réducteur 122 lui-même couplé à un arbre de rotor 124 du compresseur de pression intermédiaire 110.

Le coeur 26' du turbopropulseur est entouré par un dispositif de carénage 48' comportant une paroi annulaire externe 50' qui carène l'ensemble propulsif, et une paroi annulaire interne 52' qui entoure un canal d'écoulement du flux d'air primaire 25 alimentant le coeur 26' du turbopropulseur. Les parois annulaires externe 50' et interne 52' délimitent entre elles un compartiment intérieur 54'.

La paroi annulaire externe 50' est pourvue d'un orifice d'admission d'air 56', ainsi que d'un orifice d'échappement d'air 58' agencé en aval de l'orifice d'admission d'air 56' et diamétralement opposé par rapport à ce dernier.

De plus, une boîte de commande d'accessoires 36' est logée dans le compartiment intérieur 54'.

D'une manière analogue à ce qui est décrit ci-dessus, l'ensemble propulsif 10' comporte un ventilateur 100' logé dans le compartiment intérieur 54' de manière à générer un flux d'air de ventilation 46' par convection forcée.

Dans l'exemple illustré, le ventilateur 100' est semblable au ventilateur 100 de la figure 3, et est aussi accouplé à un engrenage 89' de la boîte de commande d'accessoires 36'.

Le fonctionnement du ventilateur 100' est donc semblable à celui du ventilateur 100 décrit ci-dessus.

L'invention selon ce troisième mode de réalisation présente ainsi les mêmes avantages que ceux décrits ci-dessus en ce qui concerne le deuxième mode de réalisation.

## Revendications

1. Ensemble propulsif (10, 10') pour aéronef, comprenant une turbomachine (12, 12') comprenant un rotor (38) et équipée d'une boîte de commande d'accessoires (36, 36') comportant au moins un engrenage (89, 89') mécaniquement couplé au rotor (38), l'ensemble propulsif comprenant en outre un dispositif de carénage (14, 48, 48'), comprenant une paroi annulaire externe (16, 50, 50') et une paroi annulaire interne (20, 52, 52') qui délimitent entre elles un compartiment intérieur (28, 54, 54') pourvu d'un orifice d'admission d'air (42, 56, 56') et d'un orifice d'échappement d'air (43, 58, 58'), ledit ensemble propulsif, comprenant au moins un ventilateur (70, 100, 100') logé dans ledit compartiment intérieur et comportant une hélice (74) , ledit ensemble propulsif étant **caractérisé en ce qu'**il comprend des moyens (76, 78, 80, 88) d'accouplement et de désaccouplement de ladite hélice (74) et dudit engrenage (89, 89').

2. Ensemble propulsif selon la revendication 1, dans lequel lesdits moyens d'accouplement et de désaccouplement comprennent un premier arbre (76) solidaire en rotation de ladite hélice (74), un second arbre (80) solidaire en rotation dudit engrenage (89, 89') de ladite boîte de commande d'accessoires (36, 36'), ainsi qu'un embrayage électromagnétique (78) reliant mutuellement ledit premier arbre (76) audit second arbre (80).

3. Ensemble propulsif selon la revendication 1 ou 2, dans lequel :
- ladite turbomachine est un turboréacteur à double flux (12),
- ladite paroi annulaire externe (16) forme un carénage externe de ladite turbomachine,
- ladite paroi annulaire interne (20) délimite un canal annulaire d'écoulement d'un flux d'air secondaire (24) de ladite turbomachine.

4. Ensemble propulsif selon la revendication 3, dans lequel ledit compartiment intérieur (28) est situé axialement entre une manche d'entrée d'air (32) et un inverseur de poussée (34) faisant partie dudit dispositif de carénage (14).

5. Ensemble propulsif selon la revendication 1 ou 2, dans lequel :
- ladite turbomachine est un turboréacteur à double flux (12),
- ladite paroi annulaire externe (50) délimite un canal annulaire d'écoulement d'un flux d'air secondaire (24) de ladite turbomachine,
- ladite paroi annulaire interne (52) délimite un coeur (26) de ladite turbomachine.

6. Ensemble propulsif selon la revendication 1 ou 2, dans lequel :
- ladite turbomachine est un turboréacteur à simple flux ou un turboréacteur à hélices non carénées ou un turbopropulseur (12'),
- ladite paroi annulaire externe (50') forme un carénage externe de ladite turbomachine,
- ladite paroi annulaire interne (52') délimite un coeur (26') de ladite turbomachine.

7. Ensemble propulsif selon l'une quelconque des revendications 1 à 6, comprenant une unité de commande (94) pour commander lesdits moyens d'accouplement et de désaccouplement (76, 78, 80, 88).

8. Ensemble propulsif selon la revendication 7, comprenant des moyens de mesure (96) configurés pour mesurer la température de l'air au sein dudit compartiment intérieur (28, 54, 54') et fournir le résultat de cette mesure à ladite unité de commande (94), et dans lequel ladite unité de commande est configurée de sorte que ladite hélice (74) du ventilateur et ledit engrenage (89, 89') de la boîte de commande d'accessoires (36, 36') soient désaccouplés lorsque la température mesurée par lesdits moyens de mesure est inférieure à un seuil de température prédéterminé, et de sorte que ladite hélice (74) du ventilateur et ledit engrenage (89, 89') de la boîte de commande d'accessoires soient accouplés lorsque la température mesurée par lesdits moyens de mesure est supérieure audit seuil de température prédéterminé.

9. Ensemble propulsif selon la revendication 7, comprenant des moyens d'information (98) pour fournir une information relative à la vitesse de rotation du rotor (38) à ladite unité de commande (94), et dans lequel ladite unité de commande est configurée de sorte que ladite hélice (74) du ventilateur et ledit engrenage (89, 89') de la boîte de commande d'accessoires (36, 36') soient désaccouplés lorsque la vitesse de rotation du rotor (38) est supérieure à un seuil de vitesse prédéterminé, et de sorte que ladite hélice (74) du ventilateur et ledit engrenage (89, 89') soient accouplés lorsque la vitesse de rotation du rotor (38) est inférieure audit seuil de vitesse prédéterminé.

10. Ensemble propulsif selon la revendication 7, comprenant des moyens de mesure (96) configurés pour mesurer la température de l'air au sein dudit compartiment intérieur (28, 54, 54') et fournir le résultat de cette mesure à ladite unité de commande (94), et des moyens d'information (98) pour fournir une information relative à la vitesse de rotation du rotor (38) à ladite unité de commande (94), et dans lequel ladite unité de commande est configurée de sorte que ladite hélice (74) du ventilateur et ledit engrenage (89, 89') de la boîte de commande d'accessoires (36, 36') soient désaccouplés lorsque la température mesurée par lesdits moyens de mesure est inférieure à un seuil de température prédéterminé et la vitesse de rotation du rotor (38) est supérieure à un seuil de vitesse prédéterminé, et de sorte que ladite hélice (74) du ventilateur et ledit engrenage (89, 89') soient accouplés lorsque la température mesurée par lesdits moyens de mesure est supérieure audit seuil de température prédéterminé ou la vitesse de rotation du rotor (38) est inférieure audit seuil de vitesse prédéterminé.

11. Aéronef, comprenant au moins un ensemble propulsif (10, 10') selon l'une quelconque des revendications 1 à 10.

12. Procédé de ventilation du compartiment intérieur (28, 54, 54') dans le dispositif de carénage (14, 48, 48') de l' ensemble propulsif (10, 10') selon l'une quelconque des revendications 1 à 10, comprenant l'accouplement de ladite hélice (74) et dudit engrenage (89, 89') de sorte que l'engrenage entraîne l'hélice de manière à générer un flux d'air de ventilation, puis le désaccouplement de ladite hélice (74) et dudit engrenage (89, 89') de sorte que l'engrenage n'entraîne plus l'hélice.

## Patentansprüche

1. Antriebssystem (10, 10') für Luftfahrzeug, das ein Triebwerk (12, 12') umfasst, das einen Rotor (38) umfasst und mit einem Zubehörsteuergehäuse (36, 36') ausgestattet ist, das mindestens ein Radgetriebe (89, 89') umfasst, das mechanisch mit dem Rotor (38) gekoppelt ist, wobei das Antriebssystem außerdem eine Verkleidungsvorrichtung (14, 48, 48') umfasst, die eine ringförmige externe Wand (16, 50, 50') und eine ringförmige interne Wand (20, 52, 52') umfasst, die zwischen einander ein Innenfach (28, 54, 54') abgrenzen, das mit einer Lufteinlassöffnung (42, 56, 56') und einer Luftauslassöffnung (43, 58, 58') versehen ist, wobei das Antriebssystem mindestens einen Ventilator (70, 100, 100') umfasst, der in dem Innenfach untergebracht ist und eine Schraube (74) umfasst, wobei das Antriebssystem **dadurch gekennzeichnet ist, dass** es Mittel (76, 78, 80, 88) zum Koppeln und Abkoppeln der Schraube (74) und des Radgetriebes (89, 89') umfasst.

2. Antriebssystem nach Anspruch 1, wobei die Mittel zum Koppeln und Abkoppeln eine erste Welle (76), die in Drehung fest mit der Schraube (74) verbunden ist, eine zweite Welle (80), die in Drehung fest mit dem Radgetriebe (89, 89') des Zubehörsteuergehäuses (36, 36') verbunden ist, sowie eine elektromagnetische Kupplung (78) umfassen, die die erste Welle (76) mit der zweiten Welle (80) gegenseitig verbindet.

3. Antriebssystem nach Anspruch 1 oder 2, wobei:
- das Triebwerk ein zweiflutiges TL-Triebwerk (12) ist,
- die externe ringförmige Wand (16) eine Außenverkleidung des Triebwerks bildet,
- die ringförmige interne Wand (20) einen ringförmigen Kanal zum Abfließen eines Sekundärluftstroms (24) des Triebwerks abgrenzt.

4. Antriebssystem nach Anspruch 3, wobei das Innenfach (28) axial zwischen einem Lufteinlassstutzen (32) und einem Schubumkehrer (34), der zu der Verkleidungsvorrichtung (14) gehört, liegt.

5. Antriebssystem nach Anspruch 1 oder 2, wobei:
- das Triebwerk ein zweiflutiges TL-Triebwerk (12) ist,
- die ringförmige externe Wand (50) einen ringförmigen Kanal zum Abfließen eines Sekundärluftstroms (24) des Triebwerks abgrenzt,
- die interne ringförmige Wand (52) ein Herz (26) des Triebwerks abgrenzt.

6. Antriebssystem nach Anspruch 1 oder 2, wobei:
- das Triebwerk ein einflutiges TL-Triebwerk oder ein Triebwerk mit nicht verkleideter Schraube oder ein TP-Triebwerk (12') ist,
- die externe ringförmige Wand (50') eine Außenverkleidung des Triebwerks bildet,
- die interne ringförmige Wand (52') ein Herz (26') des Triebwerks abgrenzt.

7. Antriebssystem nach einem der Ansprüche 1 bis 6, das eine Steuereinheit (94) zum Steuern der Mittel zum Koppeln und Abkoppeln (76, 78, 80, 88) umfasst.

8. Antriebssystem nach Anspruch 7, das Messmittel (96) umfasst, die ausgelegt sind, um die Temperatur der Luft innerhalb des Innenfachs (28, 54, 54') zu messen und das Resultat dieser Messung zu der Steuereinheit (94) zu liefern, und wobei die Steuereinheit derart ausgelegt ist, dass die Schraube (74) des Ventilators und das Radgetriebe (89, 89') des Zubehörsteuergehäuses (36, 36') abgekoppelt werden, wenn die von den Messmitteln gemessene Temperatur niedriger ist als ein vorbestimmter Temperaturschwellenwert, und derart, dass die Schraube (74) des Ventilators und das Radgetriebe (89, 89') des Zubehörsteuergehäuses gekoppelt werden, wenn die von den Messmitteln gemessene Temperatur höher ist als der vorbestimmte Temperaturschwellenwert.

9. Antriebssystem nach Anspruch 7, das Informationsmittel (98) umfasst, um eine Information in Zusammenhang mit der Drehzahl des Rotors (38) zu der Steuereinheit (94) zu liefern, und wobei die Steuereinheit derart ausgelegt ist, dass die Schraube (74) des Ventilators und das Radgetriebe (89, 89') des Zubehörsteuergehäuses (36, 36') abgekoppelt werden, wenn die Drehzahl des Rotors (38) größer ist als ein vorbestimmter Drehzahlschwellenwert, und derart, dass die Schraube (74) des Ventilators und das Radgetriebe (89, 89') gekoppelt werden, wenn die Drehzahl des Rotors (38) niedriger ist als der vorbestimmte Drehzahlschwellenwert.

10. Antriebssystem nach Anspruch 7, das Messmittel (96) umfasst, die ausgelegt sind, um die Temperatur der Luft innerhalb des Innenfachs (28, 54, 54') zu messen und das Resultat dieser Messung zu der Steuereinheit (94) zu liefern, und Informationsmittel (98), um eine Information in Zusammenhang mit der Drehzahl des Rotors (38) zu der Steuereinheit (94) zu liefern, und wobei die Steuereinheit derart ausgelegt ist, dass die Schraube (74) des Ventilators und das Radgetriebe (89, 89') des Zubehörsteuergehäuses (36, 36') abgekoppelt werden, wenn die von den Messmitteln gemessene Temperatur niedriger ist als ein vorbestimmter Temperaturschwellenwert und die Drehzahl des Rotors (38) größer ist als ein vorbestimmter Drehzahlschwellenwert, und derart, dass die Schraube (74) des Ventilators und das Radgetriebe (89, 89') gekoppelt werden, wenn die von den Messmitteln gemessene Temperatur höher ist als der vorbestimmte Temperaturschwellenwert oder die Drehzahl des Rotors (38) niedriger ist als der vorbestimmte Drehzahlschwellenwert.

11. Luftfahrzeug, das mindestens ein Antriebssystem (10, 10') nach einem der Ansprüche 1 bis 10 umfasst.

12. Belüftungsverfahren des Innenfachs (28, 54, 54') in der Verkleidungsvorrichtung (14, 48, 48') des Antriebssystems (10, 10') nach einem der Ansprüche 1 bis 10, das das Koppeln der Schraube (74) und des Radgetriebes (89, 89') derart umfasst, dass das Radgetriebe die Schraube (74) derart antreibt, dass ein Belüftungsluftstrom erzeugt wird, dann das Abkoppeln der Schraube (74) und des Radgetriebes (89, 89') derart, dass das Radgetriebe die Schraube nicht mehr antreibt.

## Claims

1. Propulsion assembly (10, 10') for an aircraft comprising a turbine engine (12, 12') comprising a rotor (38) and equipped with an accessory gear box (36, 36') comprising at least one gear (89, 89') mechanically coupled to the rotor (38), the propulsion assembly also comprising a fairing device (14, 48, 48'), comprising an outer annular wall (16, 50, 50') and an inner annular wall (20, 52, 52') that together delimit an internal compartment (28, 54, 54') fitted with an air inlet orifice (42, 56, 56') and an air exhaust orifice (43, 58, 58'), said propulsion assembly being **characterised in that** it comprises at least one fan unit (70, 100, 100') housed in said internal compartment and comprising a fan propeller (74) and coupling and uncoupling means (76, 78, 80, 88) for coupling and uncoupling said fan propeller (74) and said gear (89, 89').

2. Propulsion assembly according to claim 1, in which said coupling and uncoupling means comprise a first shaft (76) fixed in rotation to said fan propeller (74), a second shaft (80) fixed in rotation to said gear (89, 89') of said accessory gear box (36, 36'), and an electromagnetic clutch (78) connecting said first shaft (76) and said second shaft (80) to each other.

3. Propulsion assembly according to claim 1 or 2, in which:
- said turbine engine is a double flow turbojet (12),
- said outer annular wall (16) forms an external fairing of said turbine engine,
- said inner annular wall (20) delimits an annular channel (24) for a bypass air flow of said turbine engine.

4. Propulsion assembly according to claim 3, in which sad internal compartment (28) is located axially between an air intake (32) and a thrust inverter (34) forming part of said fairing device (14).

5. Propulsion assembly according to claim 1 or 2, in which:
- said turbine engine is a double flow turbojet (12),
- said outer annular wall (50) delimits an annular flow channel (24) for a bypass air flow of said turbine engine,
- said inner annular wall (52) delimits a core (26) of said turbine engine.

6. Propulsion assembly according to claim 1 or 2, in which:
- said turbine engine is a single flow turbojet or an open rotor turbine engine or a turboprop (12'),
- said outer annular wall (50') forms an external fairing of said turbine engine,
- said inner annular wall (52') delimits a core (26') of said turbine engine.

7. Propulsion assembly according to any one of claims 1 to 6, comprising a control unit (94) to control said coupling and uncoupling means (76, 78, 80, 88).

8. Propulsion assembly according to claim 7, comprising measurement means (96) configured to measure the air temperature within said internal compartment (28, 54, 54') and to provide the result of this measurement to said control unit (94), and in which said control unit is configured such that said fan propeller (74) and said gear (89, 89') of the accessory gear box (36, 36') are uncoupled when the temperature measured by said measurement means is less than a predetermined temperature threshold, and such that said fan propeller (74) and said gear (89, 89') of the accessory gear box are coupled when the temperature measured by said measurement means is greater than said predetermined temperature threshold.

9. Propulsion assembly according to claim 7, comprising information means (98) to provide information about the rotation speed of the rotor (38) to said control unit (94), and in which said control unit is configured such that said fan propeller (74) and said gear (89, 89') of the accessory gear box (36, 36') are uncoupled when the rotation speed of the rotor (38) is greater than a predetermined speed threshold, and such that said fan propeller (74) and said gear (89, 89') are coupled when the rotation speed of the rotor (38) is less than said predetermined speed threshold.

10. Propulsion assembly according to claim 7, comprising measurement means (96) configured to measure the air temperature within said internal compartment (28, 54, 54') and to provide the result of this measurement to said control unit (94), and information means (98) to provide information about the rotation speed of the rotor (38) to said control unit (94), and in which said control unit is configured such that said fan propeller (74) and said gear (89, 89') of the accessory gear box (36, 36') are uncoupled when the temperature measured by said measurement means is less than a predetermined temperature threshold and the rotation speed of the rotor (38) is greater than a predetermined speed threshold, and such that the fan propeller (74) and said gear (89, 89') are coupled when the temperature measured by said measurement means is greater than said predetermined temperature threshold, or the rotation speed of the rotor (38) is less than said predetermined speed threshold.

11. Aircraft comprising at least one propulsion assembly (10, 10') according to any one of claims 1 to 10.

12. Method of ventilating an internal compartment (28, 54, 54') in a fairing device (14, 48, 48') of a propulsion assembly (10, 10') according to any one of claims 1 to 10, comprising coupling of said fan propeller (74) and said gear (89, 89') such that the gear drives the fan propeller so as to generate a ventilation air flow, and later uncoupling of said fan propeller (74) and said gear (89, 89') such that the gear no longer drives the fan propeller.
